(19) 

**Europäisches Patentamt**
**European Patent Office**
**Office européen des brevets**

(11) **EP 4 718 372 A1**

(12) **EUROPEAN PATENT APPLICATION**

(43) Date of publication:
**01.04.2026 Bulletin 2026/14**

(21) Application number: **24306576.0**

(22) Date of filing: **27.09.2024**

(51) International Patent Classification (IPC):
**G06T 5/90** $^{(2024.01)}$   **H04N 9/68** $^{(2023.01)}$

(52) Cooperative Patent Classification (CPC):
**G06T 5/90; H04N 19/46; H04N 19/98;**
G06T 2207/10016; G06T 2207/10024;
G06T 2207/20208; H04N 9/68

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **POIRIER, Guillaume**
  **35200 RENNES (FR)**
• **CAUVIN, Laurent**
  **35250 CHEVAIGNE (FR)**
• **JUMPERTZ, Jean-Luc**
  **35000 RENNES (FR)**
• **MORVAN, Patrick**
  **35890 LAILLE (FR)**

(74) Representative: **Interdigital
Immeuble ZEN 2
845 A, avenue des Champs Blancs
35510 Cesson-Sévigné (FR)**

(54) **CONSTANT-TIME VIDEO PROCESSING FOR SDR TO SL-HDR CONVERTER**

(57)   A method comprising:
applying a correction process for correcting an input SDR picture into an output SDR picture intended to be transformed in a HDR picture using metadata, the correction process using a first LUT for transforming a luma component of the input SDR picture in a luma component of the output SDR picture and a second LUT representing a color correction function, the correction process comprising when applied to a current sample of the SDR input picture. The correction process comprises applying (801) a single LUT combining the first LUT and the second LUT to use less hardware resources and reduce the computation complexity.

Fig. 8A

**Description**

1. TECHNICAL FIELD

At least one of the present embodiments generally relates to the field of production of High Dynamic Range (HDR) video and more particularly to a method, a device and an equipment to generate a HDR content from a SDR content in a system with varying level of precision for computations and data representation.

2. BACKGROUND

Recent advancements in display technologies allow for an extended dynamic range of color, luminance and contrast in images to be displayed. The term *image* refers here to an image content that can be for example a video or a still picture or image.

High-dynamic-range video (HDR video) describes video having a dynamic range greater than that of standard-dynamic-range video (SDR video). HDR video involves capture, production, content/encoding, and display. HDR capture and display devices are capable of brighter whites and deeper blacks. To accommodate this, HDR encoding standards allow for a higher maximum luminance and use at least a 10-bit dynamic range (compared to 8-bit for non-professional and 10-bit for professional SDR video) in order to maintain precision across this extended range.

HDR production is a new domain and there will be a transition phase during which both HDR contents and SDR contents will coexist. During this coexistence phase, a same live content will be produced simultaneously in a HDR and a SDR version and distributed via a SDR/HDR distribution system to SDR and HDR capable devices. A user can then display the HDR or the SDR version of the content depending on his preferences or capabilities.

A SDR/HDR distribution system is composed of various modules comprising production systems, post production modules, pre-processor modules, encoding modules, decoding modules, post-processor modules and display modules. A production module could be for example, a HDR or SDR camera. A post-production module could be a module for color grading, insertion of special effects, tone mapping or inverse tone mapping. A pre-processor module could adapt a content to a SL-HDRx (x being 1, 2 or 3) standard for instance by generating a SDR video content with SL-HDRx metadata. The encoding module could encode the SDR video content and the metadata into a video compression format such as HEVC or VVC. The decoding module decodes the encoded SDR video content and metadata. The post-processor module could generate a HDR video content from the SDR video content and the SL-HDRx metadata. The display module is in charge of displaying the decoder SDR video or generated HDR video.

In such SDR/HDR distribution system, each module could be managed by a different entity. For instance, a first entity could manage the production module, the post-production module, the pre-processor module and the encoding module and a second entity could manage the decoding module, the post-processor module and the display module. Each entity has no control on the implementation of the various modules managed by the other entity. Therefore, even if each entity respect a same standard such as SL-HDRx, each entity is free to define at which level of precisions are performed the internal calculations of the modules it is in charge of. For instance, one entity can decide to perform the calculations of the pre-processing module in floating points while the other entity can decide that the calculations performed by the post-processing module are performed in integer with a given bit-depth precision and in a given range of values. Such drift in the precision of the internal calculations between modules can provoke inacceptable errors in a displayed HDR video generally due to clipping of some values during the calculations.

A method dealing with the above issues is proposed in the PCT application WO2023194089 incorporated by reference in its entirety to the present application. In its current implementation, this method may lead to some frame drops due to variations of its complexity.

It is desirable to overcome the above drawbacks.

It is particularly desirable to propose a solution allowing to obtain a constant complexity which would consume less hardware resources.

3. BRIEF SUMMARY

In a first aspect, one or more of the present embodiments provide a method comprising:
applying a correction process for correcting an input SDR picture into an output SDR picture intended to be transformed in a HDR picture using metadata, the correction process using a first LUT for transforming a luma component of the input SDR picture in a luma component of the output SDR picture and a second LUT representing a color correction function, the correction process comprising when applied to a current sample of the SDR input picture:

> computing chroma components from the current sample using a third LUT combining the first LUT and the second LUT, the third LUT representing a first function; and

responsive to at least one of the chroma components is out of a first range of allowed values:

estimating a clipping factor based on the computed chroma components and on a first range of allowed values;
representing each computed chroma component as a multiplication of a first sub-part depending on a luma component of the current sample and a second sub-part depending on a corresponding chroma component of the current sample and obtaining a first ratio of a correction factor to be applied to the first sub-part and a second ratio of the correction factor to be applied to the second sub-part, the correction factor being based on the clipping factor;
computing a luma value of a sample of the output SDR picture corresponding to the current sample inputting a division of the first sub-part by the correction factor to a power equal to the first ratio to a fourth LUT representing an inverse of the first function; and,
for each chroma component, computing a chroma value for the sample of the output SDR picture corresponding to the sample of the input SDR picture by dividing the second sub-part of the chroma component by the correction factor to a power equal to the second ratio.

In an embodiment, responsive to none of the chroma components is out of the first range of allowed values: applying the first LUT to the luma component of the current sample and keeping the chroma components of the current sample to obtain the sample of the output SDR picture.

In a second aspect, one or more of the present embodiments provide a device comprising electronic circuitry configured for:

applying a correction process for correcting an input SDR picture into an output SDR picture intended to be transformed in a HDR picture using metadata, the correction process using a first LUT for transforming a luma component of the input SDR picture in a luma component of the output SDR picture and a second LUT representing a color correction function, the correction process comprising when applied to a current sample of the SDR input picture:

computing chroma components from the current sample using a third LUT combining the first LUT and the second LUT, the third LUT representing a first function; and
responsive to at least one of the chroma components is out of a first range of allowed values:

estimating a clipping factor based on the computed chroma components and on a first range of allowed values;
representing each computed chroma component as a multiplication of a first sub-part depending on a luma component of the current sample and a second sub-part depending on a corresponding chroma component of the current sample and obtaining a first ratio of a correction factor to be applied to the first sub-part and a second ratio of the correction factor to be applied to the second sub-part, the correction factor being based on the clipping factor;
computing a luma value of a sample of the output SDR picture corresponding to the current sample inputting a division of the first sub-part by the correction factor to a power equal to the first ratio to a fourth LUT representing an inverse of the first function; and,
for each chroma component, computing a chroma value for the sample of the output SDR picture corresponding to the sample of the input SDR picture by dividing the second sub-part of the chroma component by the correction factor to a power equal to the second ratio.

In an embodiment the electronic circuitry is configured for:
applying the first LUT to the luma component of the current sample and keeping the chroma components of the current sample to obtain the sample of the output SDR picture responsive to none of the chroma components is out of the first range of allowed values.

In an embodiment, the metadata are compliant with SL-HDR1.

In a third aspect, one or more of the present embodiments provide a computer program comprising program code instructions for implementing the method of the firsy aspect.

In a fourth aspect, one or more of the present embodiments provide a non-transitory information storage medium storing program code instructions for implementing the method of the first aspect.

4. BRIEF SUMMARY OF THE DRAWINGS

Fig. 1 illustrates schematically an example of context in which the various embodiments are implemented;
Fig. 2 illustrates a pre-processing process;

Fig. 3 illustrates a correction process applied to a SDR picture during the pre-processing process;

Fig. 4A illustrates a first implementation of a detail of the correction process;

Fig. 4B provide a representation of the process of Figs. 2, 3 and 4A in terms of access to LUTs;

Fig. 5 illustrates a SDR to HDR reconstruction process implemented by a post-processor;

Fig. 6 illustrates an example of a post-processing process allowing generating a HDR picture from a SDR picture;

Fig. 7A illustrates schematically an example of hardware architecture of a processing module able to implement various aspects and embodiments;

Fig. 7B illustrates a block diagram of an example of a first system in which various aspects and embodiments are implemented;

Fig. 7C illustrates a block diagram of an example of a second system in which various aspects and embodiments are implemented;

Fig. 8A illustrates an implementation of a detail of the correction process according to an embodiment; and,

Fig. 8B provides a representation of the process of Figs. 2, 3 and 8A in terms of access to LUTs.

## 5. DETAILED DESCRIPTION

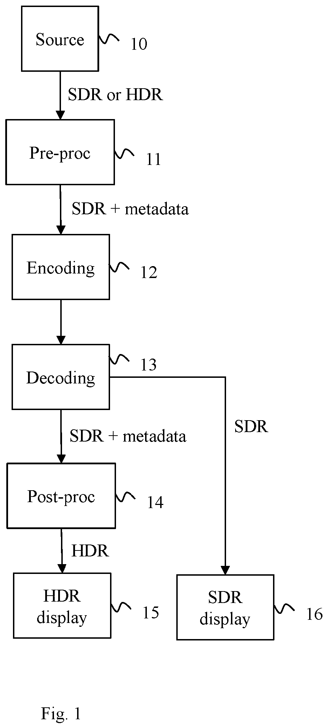

**Fig. 1** illustrates schematically an example of context in which the various embodiments are implemented.

In Fig. 1, a source device 10, such as a camera or a streaming system providing a video content, generates a video content. The source device 10 is for instance a SDR or HDR camera generating respectively a SDR or HDR video content.

The video content is then provided to a pre-processing module 11. The pre-processing module 11, for example, adapts a content to a SL-HDRx standard. For instance, the SL-HDRx standard is SL-HDR1. Therefore, when the video content is a SDR video, the pre-processing module generates SL-HDR1 metadata based on the SDR video. When the video content is a HDR video, the pre-processing module applies a tone mapping (TM) to the HDR video to generate a SDR video and generates SL-HDR1 metadata. The SL-HDR1 metadata comprise information representative of an inverse tone mapping function and of a color correction function allowing to obtain a HDR video from a SDR video. The inverse tone mapping function and the color correction function are generally implemented in the form of a LUT.

The SDR video and the SL-HDR1 metadata are then provided to an encoding module 12. The SDR video and the SL-HDR1 metadata are encoded by the encoding module in a bitstream using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode a SDR video and SL-HDR1 metadata. The output of the encoding module 12 is a bitstream representing the encoded SDR video and the SL-HDR1 metadata.

The encoding module 12 then provides the bitstream to a decoding module 13 for instance via a network. The decoding module 13 decodes the bitstream to obtain a decoded version of the SDR video and the SL-HDR1 metadata.

The SDR video is provided directly to a display device 16 adapted to display SDR contents.

The SDR video and the SL-HDR1 metadata are also provided to a post-processing module 14. The post-processing module 14 module applies an inverse tone mapping (ITM) and a color correction to the SDR video to obtain an HDR video using an ITM function and a color correction function derived from the SL-HDR1 metadata.

The HDR video is then provided to a display device (i.e., a HDR display) 15 adapted to display HDR contents.

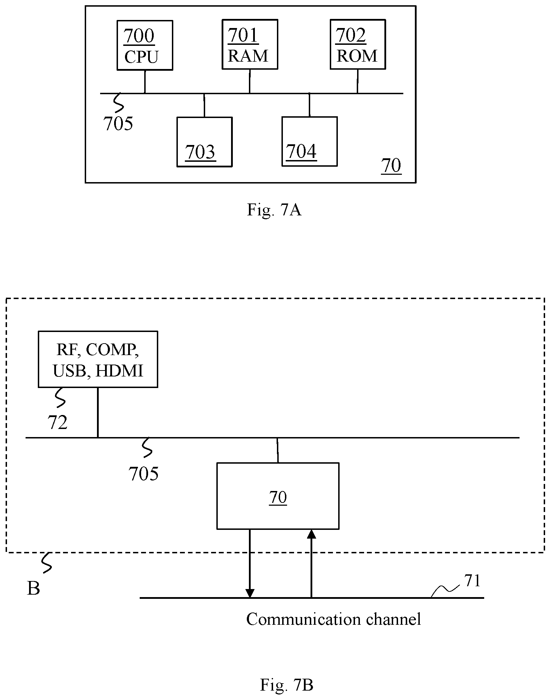

**Fig. 7A** illustrates schematically an example of hardware architecture of a processing module 70 used for instance in the pre-processing module 11 or in the post-processing module 14. The processing module 70 comprises, connected by a communication bus 705: a processor or CPU (central processing unit) 700 encompassing one or more microprocessors, general purpose computers, special purpose computers, and processors based on a multi-core architecture, as non-limiting examples; a random access memory (RAM) 701; a read only memory (ROM) 702; a storage unit 703, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 704 for exchanging data with other modules, devices, systems or equipment. The communication interface 704 can include, but is not limited to, a transceiver configured to transmit and to receive data over a communication network 71. The communication interface 704 can include, but is not limited to, a modem or a network card.

For example, the communication interface 704 enables for instance the processing module 70 to receive the HDR or SDR data and to output HDR or SDR data along with SL-HDR1 metadata.

The processor 700 is capable of executing instructions loaded into the RAM 701 from the ROM 702, from an external memory (not shown), from a storage medium, or from a communication network. When the processing module 70 is powered up, the processor 700 is capable of reading instructions from the RAM 701 and executing them.

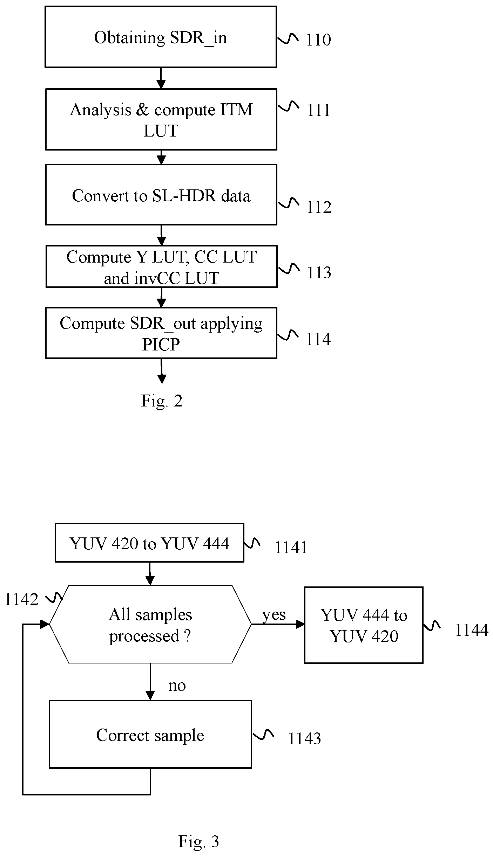

When the processing module 70 is comprised in the pre-processing module 11, these instructions form a computer program causing, for example, the implementation by the processor 700 of a process represented in Figs. 2, 3 and 8A.

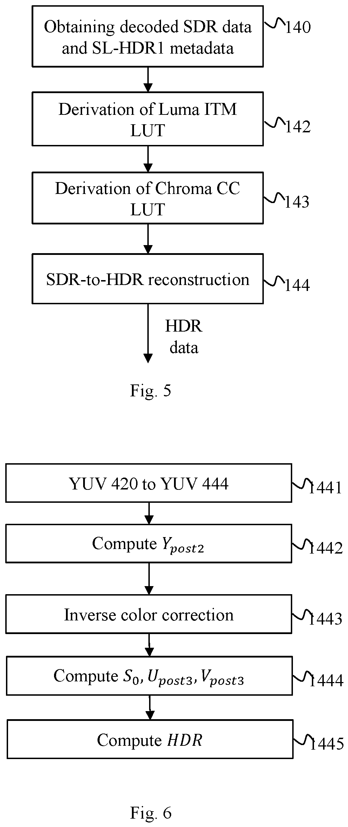

When the processing module 70 is comprised in the post-processing module 14, these instructions form a computer program causing, for example, the implementation by the processor 700 of a process represented in Figs. 5 and 6.

All or some of the algorithms and steps of said processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

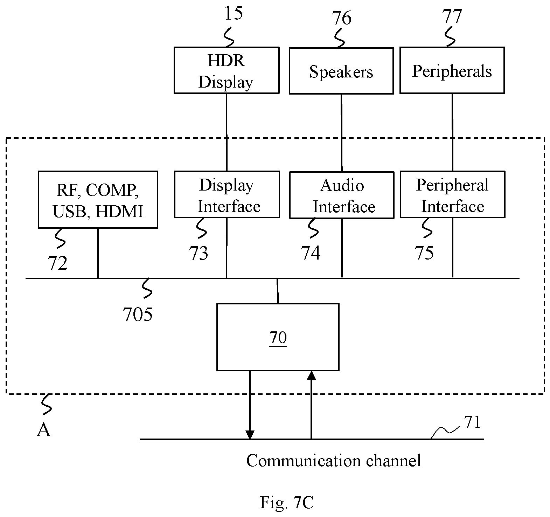

**Fig. 7C** illustrates a block diagram of an example of a system A implementing a post processing module in which various aspects and embodiments are implemented.

System A can be embodied as a device including various components or modules and is configured to generate a HDR displayable video. Examples of such system include, but are not limited to, various electronic systems such as personal computers, laptop computers, smartphones, tablet, TV, or set top boxes. Components of system A, singly or in combination, can be embodied in a single integrated circuit (IC), multiple ICs, and/or discrete components. For example, in at least one embodiment, the system A comprises one processing module 70 that implements the post-processing module 14. In various embodiments, the system A is communicatively coupled to one or more other systems, or other electronic devices, via, for example, a communication bus or through dedicated input and/or output ports.

The input to the processing module 70 can be provided through various input modules as indicated in a block 72. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 7C, include composite video.

In various embodiments, the input modules of block 72 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system A to other electronic devices across USB and/or HDMI connections. It is to be understood that various aspects of input processing, for example, Reed-Solomon error correction, can be implemented, for example, within a separate input processing IC or within the processing module 70 as necessary. Similarly, aspects of USB or HDMI interface processing can be implemented within separate interface ICs or within the processing module 70 as necessary. The demodulated, error corrected, and demultiplexed stream is provided to the processing module 70.

Various elements of system A can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system A, the processing module 70 is interconnected to other elements of said system A by the bus 705.

The communication interface 704 of the processing module 70 allows the system A to communicate on the communication network 71. The communication network 71 can be implemented, for example, within a wired and/or a wireless medium.

Data is streamed, or otherwise provided, to the system A, in various embodiments, using a wireless network such as a Wi-Fi network, for example IEEE 802.11 (IEEE refers to the Institute of Electrical and Electronics Engineers). The Wi-Fi signal of these embodiments is received over the communications network 71 and the communications interface 704 which are adapted for Wi-Fi communications. The communications network 71 of these embodiments is typically connected to an access point or router that provides access to external networks including the Internet for allowing streaming applications and other over-the-top communications. Still other embodiments provide streamed data to the system A using the RF connection of the input block 72. As indicated above, various embodiments provide data in a non-streaming manner, for example, when the system A is a smartphone or a tablet. Additionally, various embodiments use wireless networks other than Wi-Fi, for example a cellular network or a Bluetooth network.

The system A can provide an output signal to various output devices using the communication network 71 or the bus 705. For example, the system A can provide a HDR video.

The system A can provide an output signal to various output devices, including the HDR display 15, speakers 76, and other peripheral devices 77. The HDR display 15 of various embodiments includes one or more of, for example, a touchscreen display, an organic light-emitting diode (OLED) display, a curved display, and/or a foldable display. The HDR display 15 can be for a television, a tablet, a laptop, a cell phone (mobile phone), or other devices. The HDR display 15 can also be integrated with other components (for example, as in a smart phone), or separate (for example, an external monitor for a laptop). The other peripheral devices 77 include, in various examples of embodiments, one or more of a stand-alone digital video disc (or digital versatile disc) (DVR, for both terms), a disk player, a stereo system, and/or a lighting system. Various embodiments use one or more peripheral devices 77 that provide a function based on the output of the system A. For example, a disk player performs the function of playing the output of the system A.

In various embodiments, control signals are communicated between the system A and the HDR display 15, speakers 76, or other peripheral devices 77 using signaling such as AV.Link, Consumer Electronics Control (CEC), or other communications protocols that enable device-to-device control with or without user intervention. The output devices can be communicatively coupled to system A via dedicated connections through respective interfaces 73, 74, and 75. Alternatively, the output devices can be connected to system A using the communication network 71 via the communication interface 704. The HDR display 15 and speakers 76 can be integrated in a single unit with the other components of system A in an electronic device such as, for example, a television. In various embodiments, the display interface 73 includes a display driver, such as, for example, a timing controller (T Con) chip.

The HDR display 15 and speakers 76 can alternatively be separate from one or more of the other components, for example, if the RF module of block 72 is part of a separate set-top box. In various embodiments in which the HDR display 15 and speakers 76 are external components, the output signal can be provided via dedicated output connections, including, for example, HDMI ports, USB ports, or COMP outputs.

**Fig. 7B** illustrates a block diagram of an example of the system B adapted to implement the pre-processing module 11 in which various aspects and embodiments are implemented.

System B can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system B, singly or in combination, can be embodied in a single integrated circuit (IC), multiple ICs, and/or discrete components. For example, in at least one embodiment, the system B comprises one processing module 70 that implement the pre-processing module 11. In various embodiments, the system B is communicatively coupled to one or more other systems, or other electronic devices, via, for example, a communications bus or through dedicated input and/or output ports.

The input to the processing module 70 can be provided through various input modules as indicated in block 72 already described in relation to Fig. 7C.

Various elements of system B can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system B, the processing module 70 is interconnected to other elements of said system B by the bus 705.

The communication interface 704 of the processing module 70 allows the system B to communicate on the communication network 71. The communication network 71 can be implemented, for example, within a wired and/or a wireless medium.

Data is streamed, or otherwise provided, to the system B, in various embodiments, using a wireless network such as a Wi-Fi network, for example IEEE 802.11 (IEEE refers to the Institute of Electrical and Electronics Engineers). The Wi-Fi signal of these embodiments is received over the communications network 71 and the communications interface 704 which are adapted for Wi-Fi communications. The communications network 71 of these embodiments is typically connected to an access point or router that provides access to external networks including the Internet for allowing streaming applications and other over-the-top communications. Still other embodiments provide streamed data to the system B using the RF connection of the input block 72. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), smartphones, tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of' for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a SDR image or video sequence and SL-HDRx metadata of a described embodiment. Such a signal can be formatted, for example, as an electromagnetic wave (for example, using a radio frequency portion of spectrum) or as a baseband signal. The formatting can include, for example, encoding a SDR image or video sequence with SL-HDR1 metadata in an encoded stream and modulating a carrier with the encoded stream. The information that the signal carries can be, for example, analog or digital information. The signal can be transmitted over a variety of different wired or wireless links, as is known. The signal can be stored on a processor-readable medium.

**Fig. 2** illustrates a pre-processing process allowing generating a SDR picture along with SL-HDR1 metadata.

The pre-processing process of Fig. 2 is for instance executed by the processing module 70 of the system B when this module implements the pre-processing module 11.

In a step 110, the processing module 70 obtains input SDR data *SDR in.* The input SDR data *SDR in* are for example an input SDR video in YUV format.

In a step 111 the processing module 70 analyze the SDR data *SDR in* and computes LUTs (Look-Up Table) allowing converting the SDR data *SDR_in* in HDR data. During step 111, the processing module 70 computes an inverse tone mapping (ITM) LUT *ITM_LUT* and a color correction (CC) LUT *lutCC.*

In a step 112, the processing module 70 converts the ITM LUT and the CC LUT in SL-HDR metadata.

In a step 113, The processing module 70 computes a LUT *Y LUT* simulating an inverse tone mapping by the ITM LUT followed by a tone mapping. The LUT *Y_LUT* allows insuring that the HDR data that would be obtained on the pre-processing module 11 side by applying the ITM LUT to the input SDR data *SDR_in* is as close as possible to the HDR data outputted by the post-processing module 14. In other words, the LUT *Y LUT* limit the difference between the HDR data that would be obtained on the pre-processing module 11 side by applying the ITM LUT to the input SDR data *SDR in* and the HDR data outputted by the post-processing module 14. During step 113, the processing module obtains also an inverse of the color correction LUT *lutCC* called *inv lutCC.*

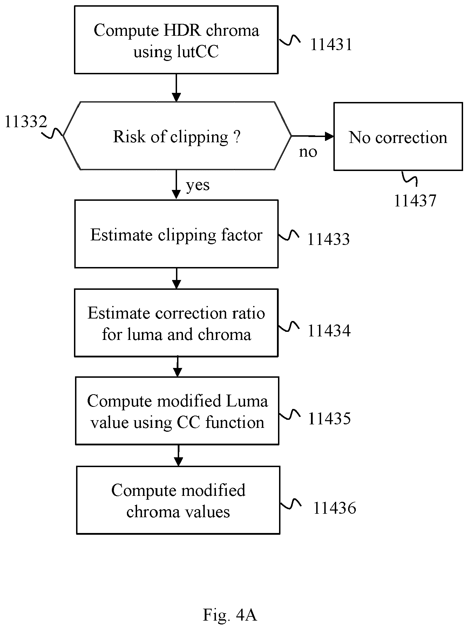

In a step 114, the processing module 70 generates SDR data *SDR_out* from the input SDR data *SDR in.* In an embodiment, step 114 comprises applying the LUT *Y_LUT* to the component Y of the input SDR data *SDR in* and, under some conditions, applying a correction process called *post int clipping prevention* (PICP) process using the LUT *Y LUT,* the color correction LUT *lutCC* and the inverse color correction LUT *inv lutCC.* The PICP process prevents clipping in an integer implementation of a SL-HDR1 post-processor by modifying the input SDR data *SDR in.* The PICP process is detailed later in relation to Figs. 3 and 4A.

One can note that, when the condition to apply the PICP process to a current sample of the input SDR data *SDR_in* is not fulfilled, the processing module 70 still generates a corresponding modified sample for the output SDR data *SDR_out* by applying the LUT *Y LUT* to the component Y of the current sample. In that case, if the components of the current sample are (y,u,v), the components of the corresponding sample of the output SDR data *SDR_out* are (y',u,v).

If the condition to apply the PICP process to the current sample is fulfilled, as described latter in relation to Figs. 3 and 4A, the processing module 70 modifies all components of the current sample to obtain components of the corresponding sample of the output SDR data *SDR_out* $Y_{in\_corr}$, $U_{in\_corr}$ and $V_{in\_corr}$

**Fig. 5** and **6** below illustrates why there is a need of a correction of the input SDR data *SDR_in* by the PICP process.

**Fig. 5** illustrates a post-processing process allowing generating a HDR picture from a SDR picture.

The post-processing process described in Fig. 5 is a summary of the post-processing process described in section 7.2.4 of the standard SL-HDR1 (ETSI TS 103 433-1 V1.4.1, High-Performance Single Layer High Dynamic Range (HDR) System for use in Consumer Electronics devices; Part 1: Directly Standard Dynamic Range (SDR) Compatible HDR System (SL-HDR1)*).*

The post-processing process of Fig. 5 is for instance executed by the processing module 70 of the system A when this module implements the post-processing module 14.

In a step 140, the processing module 70 obtains a decoded SDR video and SL-HDR1 metadata. In that case, the system A has received an encoded video stream comprising the SDR video and the SL-HDR1 metadata and has decoded this video stream using a decoding module such as the decoding module 13.

In a step 142, the processing module 70 derives an ITM LUT to be applied to a luma (i.e. luminance) component of the SDR video from the SL-HDR1 metadata. During step 142, the process described in section 7.2.3.1 of the SL-HDR1 specification is applied.

In a step 143, the processing module 70 derives a color correction LUT to be applied to chroma (i.e. chrominance) components of the SDR video from the SL-HDR1 metadata. The derivation of the look-up table *lutCC[]* use equation (21) and (22) of section 7.2.3.2 of the SL-HDR1 specification as follows:

$$lutCC[0] = 0,125$$

$$lutCC[Y] = Min\left( lutCC[0]; \frac{1}{Max\left( \frac{R_{sgf}}{255}; R_{sgf} \times g(Y_n) \right)} \times L(Y_n) \right)$$

where $Y_n = \frac{Y}{maxSampleVal-1}$, and *g(), L()* and $R_{sgt}$ being defined in the SL-HDR1 specification.

In a step 144, the processing module 70 reconstructs a HDR video from the SDR video, the ITM LUT *ITM_LUT* and color correction LUT *lutCC* derived from the SL-HDR1 metadata. During step 144, the process described in section 7.2.4 of the SL-HDR1 specification is applied. Example of steps applied during step 144 is detailed in relation to Fig. 6.

Fig. 6 illustrates steps of a SDR to HDR reconstruction process.

In general, the decoded SDR video is represented in YUV 420 format with a limited range while the internal calculations in the post-processor are performed in YUV 444 format with a full range. A limited range means that a range of possible values defined by the bit-depth (8 bits, 10 bits, 12 bits, etc) is not fully occupied. An example of a typical limited range for a bit-depth of 10 bits for a Y (respectively for a U or V) component is [64;940] (respectively [64; 960]) while the full range allowed by the 10 bits is [0; 1023].

The process of Fig. 6 is executed for each picture of the decoded SDR video, called *SDR picture* in the following.

In a step 1441, the processing module 70 converts a current SDR picture in a converted picture in YUV 444 format with a full range. To do so, the processing module 70 starts by up-sampling the chroma components of the input SDR picture to obtain a SDR picture in YUV 444 format. Then, each component of each sample of the picture in YUV 444 format is converted from the limited range to the full range, for example, by applying the following process:

$$Y_{in} = (Y_{in\_lr} - 64)/876 \times 1023$$

$$U_{in} = (U_{in\_lr} - 512)/896 \times 1023 + 512$$

$$V_{in} = (V_{in\_lr} - 512)/896 \times 1023 + 512$$

where $Y_{in\_lr}$, $U_{in\_lr}$ and $V_{in\_lr}$ are the three components of a sample of the SDR picture in YUV 444 format and $Y_{in}$, $U_{in}$ and $V_{in}$ are three components of a corresponding sample of the converted picture. In other words, the processing module 70 converts the values representative of the samples (i.e. the Y, U and V components) of the SDR picture in YUV 444 format from a first range (i.e. the limited range) to a second range (i.e. the full range), the second range being larger than the first range. During step 1441, the processing module 70 centers the obtained chroma components $U_{in}$ and $V_{in}$ using equation (25) of section 7.2.4 of the SL-HDR1 specification to obtain centered components $U_{post1}$ and $V_{post1}$:

$$\begin{cases} U_{post1} = U_{in} - midSampleVal \\ V_{post1} = V_{in} - midSampleVal \end{cases}$$

where the value *midSampleVal* is defined in the SL-HDR1 specification (512 for 10 bits components).

One can note that the current SDR picture could be in another format such as the format YUV 444. In that last case, no up-sampling of the chroma components is required.

Step 1441 is followed by steps 1442 to 1447 applied to each sample of the converted picture. A sample processed during an iteration of steps 1442 to 1447 is called current sample in the following.

In step 1442, the processing module 70 computes a luma component $Y_{post2}$. To do so, the processing module first applies a re-saturation to the luma component $Y_{in}$ of the current sample using equation (26) specified in section 7.2.4 of the SL-HDR1 specification to obtain a re-saturated luma component $Y_{post1}$:

$$Y_{post1} = Y_{in} + Max(0; mu_0 \times U_{post1} + mu_1 \times V_{post1})$$

The re-saturated value $Y_{post1}$ is then clamped in the range [0; 1023] using equation (27) of section 7.2.4 of the SL-HDR1 specification to obtain the luma component value $Y_{post2}$:

$$Y_{post2} = Clip3(0; maxSampleVal - 1; Y_{post1})$$

In a step 1443, the processing module 70 applies a color correction to the chroma components values $U_{post1}$ and $V_{post1}$ using the look-up table *lutCC[]*. To do so, the processing module 70 applies equation (28) of section 7.2.4:

$$\begin{cases} U_{post2} = lutCC[Y_{post2}] \times U_{post1} \\ V_{post2} = lutCC[Y_{post2}] \times V_{post1} \end{cases}$$

In a step 1444, the processing module 70 computes components $S_0$, $U_{post3}$, $V_{post3}$. Components $S_0$, $U_{post3}$ and $V_{post3}$ are computed using equations (29) and (30) specified in section 7.2.4 of the SL-HDR1 specification as follows: $S_0$ is initialized to zero.

$$T = k_0 \times U_{post2} \times V_{post2} + k_1 \times U_{post2} \times U_{post2} + k_2 \times V_{post2} \times V_{post2}$$

$$\text{If } (T \leq 1), S_0 = \sqrt{1 - T}, U_{post3} = U_{post2} \text{ and } V_{post3} = V_{post2}$$

Otherwise ($T > 1$), $U_{post3}$ and $V_{post3}$ are derived from $U_{post2}$ and $V_{post2}$ as follows:

$$\begin{cases} U_{post3} = \dfrac{U_{post2}}{\sqrt{T}} \\ V_{post3} = \dfrac{V_{post2}}{\sqrt{T}} \end{cases}$$

The most used implementation of SL-HDR1, called *non-constant luminance* (NCL) mode, specifies that $k_0 = k_1 = k_2 = 0$. Therefore, in the NCL mode, $S_0$, $U_{post3}$, $V_{post3}$ are defined as follows:

$$S_0 = 1$$

$$U_{post3} = U_{post2}$$

$$V_{post3} = V_{post2}$$

In most of the cases, these equations are sufficient to render accurately HDR video in the NCL mode. However, some errors may occur in some particular cases.

As an example, an integer implementation of the post-processing module 14 in NCL mode could use a precision of 14 bits + 1 bit for sign for an internal representation of chroma values $U_{post2}$ and $V_{post2}$ while a precision of 9 bits + 1 bit for sign is used for a representation of the chroma values $U_{post3}$ and $V_{post3}$.

In this integer implementation and for some very saturated red and blue colors in the SDR video (provided, for instance, by the pre-processor 11), $U_{post2}$ and/or $V_{post2}$ could have an absolute value out of a range covered 9 bits. In that case, the conversion from $U_{post2}$/ $V_{post2}$ on 14 bits + 1 bit for sign to $U_{post3}$/ $V_{post3}$ on 9 bits + 1 bit for sign implies clipping when $U_{post2}$/ $V_{post2}$ has an out of range absolute value. Such clipping is at the origin of errors in the reconstructed HDR image.

In a step 1445, the processing module 70 derives RGB values of a sample of a HDR picture corresponding to the current sample from the values $S_0$, $U_{post3}$ and $V_{post3}$ using equations (31), (32) and (33) of section 7.2.4 of the SL-HDR1 specification.

When all samples of the converted picture have been processed, the processing module stops the computation of the HDR picture.

**Fig. 3** illustrates the PICP process applied to a SDR picture.

The purpose of the process of Fig. 3 is to prevent any clipping of the chroma components values $U_{post2}$ and $V_{post2}$. The process of Fig. 3 is applied to each SDR picture of the input SDR data *SDR in.*

In a step 1141, the processing module 70 converts a current SDR picture in a converted picture in YUV 444 format with a full range applying the same process than in step 1441.

In a step 1142, the processing module 70 determines if all samples of the converted picture have been processed. If at least one sample of the converted picture remains to be processed, step 1142 is followed by steps 1143. Step 1143 is applied to one sample of the converted picture, called *current sample* in the following.

During step 1143, the processing module 70 corrects the current sample, if necessary, i.e. if the current sample risk to provoke a clipping during the post-processing. Step 1143 is detailed in relation to Fig. 4A.

If all samples of the converted picture have been processed, in a step 1144, the processing module 70 converts the corrected converted picture (in YUV 444 format with full range) back to a SDR picture in YUV 420 format and limited range. This conversion is typically done as follow:

$$Y_{\text{in\_corr\_lr}} = (\text{INT})( Y_{\text{in\_corr}} / 1023 * 876 + 64.5)$$

$$U_{\text{in\_corr\_lr}} = (\text{INT})( U_{\text{in\_corr}} / 1023 * 896 + 512.5)$$

$$V_{\text{in\_corr\_lr}} = (\text{INT})( V_{\text{in\_corr}} / 1023 * 896 + 512.5)$$

where $Y_{\text{in\_corr}}$, $U_{\text{in\_corr}}$ and $V_{\text{in\_corr}}$ are the components of a sample of the corrected converted picture and $Y_{\text{in\_corr\_lr}}$, $U_{\text{in\_corr\_lr}}$ and $V_{\text{in\_corr\_lr}}$ are the components of a sample of the corrected converted picture in YUV 420 format and limited range.

**Fig. 4A** illustrates a detail of the correction process of step 1143.

Fig. 4A illustrates a correction process applied to a current sample of a converted picture, the same process being applied to each sample of the converted picture.

In a step 11431, the processing module 70 computes U and V components from the chroma components of the current sample using the color correction LUT *lutCC.* In an embodiment, during step 11431, the processing module 70 executes steps 1442 to 1445 described in relation to Fig. 6. In other words, the processing module 70 computes the chroma components $U_{post3}$ and $V_{post3}$ from the components of the current sample using the LUT *lutCC.*

Taking again the example of the integer implementation of the post-processing module 14 in NCL mode using a precision of 14 bits + 1 bit for sign for an internal representation of chroma values $U_{post2}$ and $V_{post2}$ and a precision of 9 bits + 1 bit for sign for a representation of the chroma values $U_{post3}$ and $V_{post3}$, a maximum absolute value that can be taken by $U_{post3}$ (respectively $V_{post3}$) is *Umax* (respectively *Vmax)* equal to "$2^9 = 511$". All absolute values of $U_{post2}$ (respectively $V_{post2}$) greater than "511" are clipped to "511" when converted to 9 bits + 1 bit for sign to compute $U_{post3}$ and $V_{post3}$.

In a step 11432, the processing module 70 estimates if there is a risk of clipping during the derivation of the HDR sample corresponding to the current sample by the post-processing module 14. To do so, during step 11432, the processing module 70 determines if the following criterion is verified:

$$(U_{post2} > U_{max}) \text{ or } (U_{post2} < -U_{max}) \text{ or } (V > V_{max}) \text{ or } (V_{post2} < -V_{max})$$

If yes (i.e., if the above criterion is verified), the processing module 70 continues with step 11433. Otherwise, the processing module 70 continues with step 11437 with no correction of the current sample and goes back to step 1142.

In a step 11433 the processing module 70 estimates a clipping factor *div_UV* based on the computed chroma components $U_{post3}$ and $V_{post3}$ and on a precision of the components $U_{post3}$ and $V_{post3}$ computed in step 1444.

The following process is applied during step 11433 to determine the clipping factor *div_UV* (all computations being performed in floating points):

$$\text{if } (U_{post2} > U_{max})$$

$$div\_U = U_{post2} / U_{max};$$

$$\text{if } (U_{post2} < -U_{max})$$

$$div\_U = -U_{post2} / U_{max};$$

$$\text{if } (V_{post2}) > V_{max})$$

$$div\_V = V_{post2}) / V_{max};$$

$$\text{if } (V_{post2}) < -V_{max})$$

$$div\_V = -V_{post2}) / V_{max};$$

$$div\_UV = \text{MAX}(div\_U, div\_V);$$

In a step 11434, the processing module 70 represents each computed chroma component $U_{post3}$ and $V_{post3}$ as a multiplication of a first sub-part depending on a luma component of the current sample and a second sub-part depending on a corresponding chroma component of the current sample and obtains a first ratio *partY* of a correction factor based on the clipping factor to be applied to the first sub-part and a second ratio *(1-partY)* of the correction factor to be applied to the second sub-part.

As detailed in equation (29) of the SL-HDR1 specification:

$$U_{post3} = lutCC[Y_{post2}] \cdot U_{post1}$$

$$V_{post3} = lutCC\big[Y_{\text{post2}}\big] \cdot V_{\text{post1}}$$

When the clipping factor *div_UV* for the current sample is greater than "1", this means that the chroma components $U_{post3}$ and $V_{post3}$ need to be modified as follow:

$$U_{post3_{target}} = \frac{U_{post3}}{\text{div\_UV}} = \frac{lutCC\big[Y_{\text{post2}}\big] \cdot U_{\text{post1}}}{\text{div\_UV}} = \frac{lutCC\big[Y_{\text{post2}}\big]}{\text{div\_UV}^{\text{partY}}} \cdot \frac{U_{\text{post1}}}{\text{div\_UV}^{(1-\text{partY})}}$$

$$V_{post3_{target}} = \frac{V_{post3}}{\text{div\_UV}} = \frac{lutCC\big[Y_{\text{post2}}\big] \cdot V_{\text{post1}}}{\text{div\_UV}} = \frac{lutCC\big[Y_{\text{post2}}\big]}{\text{div\_UV}^{\text{partY}}} \cdot \frac{V_{\text{post1}}}{\text{div\_UV}^{(1-\text{partY})}}$$

$lutCC[Y_{\text{post2}}]$ corresponds to the first sub-part and $U_{\text{post1}}$ corresponds to the second sub-part. As can be seen, one part of the correction applies to the first sub-part $lutCC[Y_{\text{post2}}]$ that depends on the Luma component $Y_{post2}$ that depends directly on the luma component $Y_{in}$ of the converted picture. A second part of the correction applies to the chroma components $U_{post1}$ and $V_{post1}$ that depend directly on the chroma components $U_{in}$ and $V_{in}$ of the converted picture.

The first ratio *partY* defines what correction needs to be applied to the luma component of the converted picture and, via the second ratio *(1-partY)*, what correction needs to be applied to the chroma components of the converted picture to avoid any clipping at the post-processing module 14 side.

The ratio *partY* has a direct influence on the displayed SDR video. If the correction is applied only on the luma component $Y_{in}$ of the current sample, i.e. *partY* = 1, the corrected sample is appearing much brighter when compared to the corresponding sample in the decoded SDR picture. If the correction is applied only on the chroma components $U_{in}$ and $V_{in}$ of the current sample, i.e. *partY* = 0, the corrected sample is appearing much darker when compared to the corresponding sample of the decoded SDR picture.

In an embodiment, the first ratio *partY* is a pre-determined fixed value defined for all samples. This fixed value can be selected by finding the best compromise for a set of selected SDR pictures that originally make the post-processor module clip, the best compromise being the ratio *partY* minimizing a visual difference between the original SDR picture and the corrected SDR picture.

In an embodiment, the first ratio *partY* is predetermined but dynamic between pictures, i.e. it can adapt to the characteristics of each picture. In that case, the ratio *partY* is the same for an entire picture. For instance, the ratio *partY* depends on a brightness of the current picture, or on its relative saturation. As an example, if the picture is a relatively bright picture, *partY* may need to have a higher value than for a dark picture. The mean brightness value of the entire picture can then be used to adjust *partY* value for the entire picture. Similarly, if the picture is a relatively saturated picture, *(1-partY)* may need to have a higher value than for a dark picture. The mean saturation value of the entire picture can then be used to adjust *partY* value for the entire picture.

In an embodiment, the ratio *partY* is predetermined but dynamic within a picture, i.e. it can adapt to the characteristics of each sample. In that case, the ratio *partY* is not the same for an entire picture. For instance, the ratio *partY* could depend on the brightness of the current sample, or on its relative saturation. As an example, if the current sample is a relatively bright sample, *partY* may need to have a higher value than for a dark sample. The brightness value of the current sample can then be used to adjust *partY* value for the current sample. Similarly, if the current sample is a relatively saturated sample, *(1-partY)* may need to have a higher value than for a dark sample. The saturation value of the current sample can then be used to adjust *partY* value for the current sample.

In an embodiment, the ratio *partY* value is fixed to "0.75" for all samples, therefore *(1 - partY)* = 0.25. It has a limited impact on the perception of the corrected picture and it has the advantage of being efficiently implemented on CPU based platforms. Indeed, in CPU based platforms, the square root function is very efficient and very fast, while the power function is a lot slower and less efficient. Using *partY* = 0.75 leads to the following computations:

$$\text{div\_UV}^{(1-\text{partY})} = \text{div\_UV}^{0.25} = \text{div\_UV}^{0.5 \times 0.5} = \text{sqrt(div\_UV)} \cdot \text{sqrt(div\_UV)}$$

$$\text{div\_UV}^{\text{partY}} = \text{div\_UV}^{0.75} = \text{div\_UV}^{1-0.25} = \frac{\text{div\_UV}}{\text{div\_UV}^{0.25}}$$

$$= \frac{\text{div\_UV}}{\text{sqrt(div\_UV)} \cdot \text{sqrt(div\_UV)}}$$

In a step 11434, the processing module 70 computes a corrected luma value $Y_{in\_corr}$ of a sample of a corrected SDR picture corresponding to the current sample using a division of the first sub-part by the correction factor to a power equal to the first ratio as follows

$$lutCC[Y_{in\_corr}] = \frac{lutCC[Y_{post2}]}{\text{div\_UV}^{\text{partY}}}$$

In an embodiment of step 11434, the corrected luma value $Y_{in\_corr}$ is computed directly by computing the inverse of the color correction LUT *lutCC*, i.e., *inv_lutCC[]*. The corrected luma value $Y_{in\_corr}$ is computed as follows:

$$Y_{in\_corr} = inv\_lutCC\left[\frac{lutCC[Y_{post2}]}{div\_UV^{\text{partY}}}\right]$$

In a step 11435, for each chroma component ($U_{in}$ and $V_{in}$), the processing module 70 computes a chroma value ($U_{in\_corr}$ or $V_{in\_corr}$) for the sample of the corrected SDR picture corresponding to the current sample by using a division of the second sub-part of the chroma component by the correction factor to a power equal to the second ratio as follows:

$$U_{in\_corr} = \frac{U_{post1}}{\text{div\_UV}^{(1-\text{partY})}}$$

$$V_{in\_corr} = \frac{V_{post1}}{\text{div\_UV}^{(1-\text{partY})}}$$

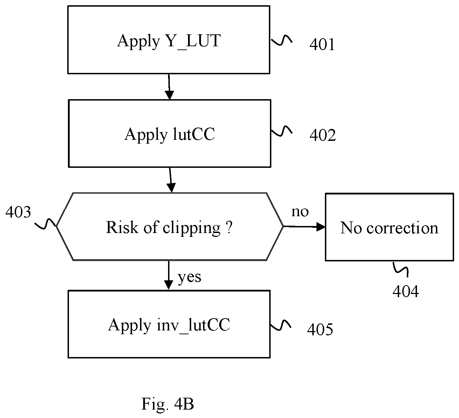

At the end of the process of Fig. 4, the processing module 70 obtains a corrected sample with components $Y_{in\_corr}$, $U_{in\_corr}$ and $V_{in\_corr}$.

In the embodiments described above, the PICP process (i.e. SDR correction step 114) is performed during the pre-processing process by the pre-processing module 11. In that case, the SDR video that is encoded along with the SL-HDR1 metadata by the encoding module 12 comprises corrected SDR pictures resulting from an application of the SDR correction step 114 on the SDR video provided by the source device 10 (or resulting from an ITM applied to the HDR video provided by the source device 10). In this embodiment, the post-processing module 14 doesn't have to correct the SDR pictures to avoid a clipping since it has already been done by the pre-processing module 11.

Fig. 4B provide a representation of the process of Figs. 2, 3 and 4A in terms of access to LUTs.

In step 401, the processing module 70 accesses and applies the LUT *Y_LUT* in step 114.

In a step 402, the processing module 70 accesses and applies the LUT *lutCC* in step 11431 (corresponding to step 1443).

In a step 403, the processing module 79 determines if there is a risk of clipping.

If there is no risk of clipping, no more LUT is accessed and applies in a step 404.

If there is a risk of clipping, a step 405 is applied during which the processing module 70 accesses and applies the LUT *inv_lutCC* in step 11434.

As can be seen, when PICP doesn't apply to a sample, two accesses to (and application of) a LUT are required while when PICP applies to a sample, three accesses to a LUT are required. The implementation of Figs. 2, 3 and 4 provokes therefore some instabilities in the accesses and applications of LUTs. Consequently, the implementation of the process of Figs. 2, 3 and 4 has a variable complexity. This variable complexity renders an efficient design of a hardware implementation of the process of Figs. 2, 3 and 4 difficult. Indeed, it had been observed that samples requiring a modification by the PICP process are relatively rare but the hardware needs to be aligned on the less favorable situation which is when three LUTs are accessed and applied.

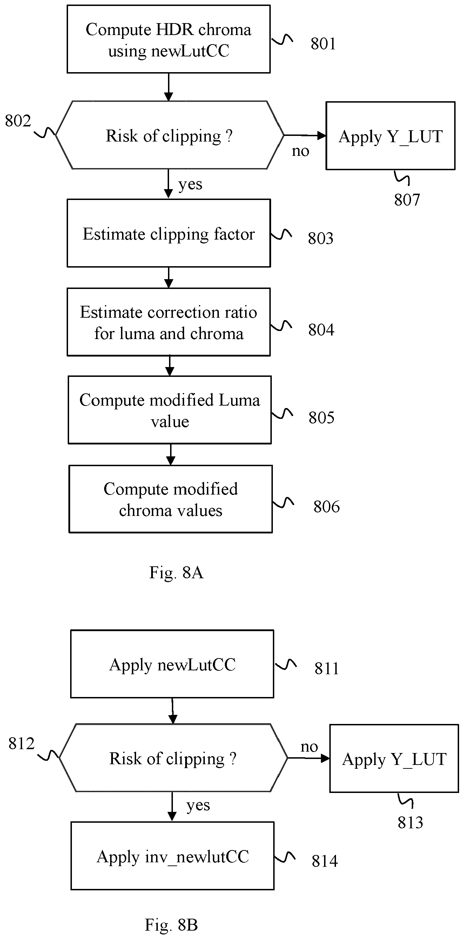

**Fig. 8A** illustrates an implementation of the process of step 1143 offering a reduced and non-variable complexity.

Fig. 8A illustrates a correction process applied to a current sample of a converted picture, the same process being applied to each sample of the converted picture.

In a step 801, the processing module 70 computes U and V components from the chroma components of the current sample using a new color correction LUT *newlutCC*. *newlutCC* is a combination of *lutCC* and *Y_LUT*. *newlutCC* represents a color correction function different from the color correction function represented by *lutCC*. For each input index *i* of the LUT:

$$newlutCC[i]=lutCC[Y\_LUT[i]]$$

In an embodiment, during step 801, the processing module 70 executes steps 1442 to 1445 described in relation to Fig. 6 replacing *lutCC* by *newlutCC*. In other words, the processing module 70 computes the chroma components $U_{post3}$ and $V_{post3}$ from the components of the current sample using the LUT *newlutCC*.

In a step 802, the processing module 70 estimates if there is a risk of clipping during the derivation of the HDR sample corresponding to the current sample by the post-processing module 14. To do so, during step 802, the processing module 70 determines if the following criterion is verified:

$$(U_{post2}> U_{max}) \text{ or } (U_{post2}< - U_{max}) \text{ or } (V> V_{max}) \text{ or } (V_{post2}< - V_{max})$$

If yes (i.e., if the above criterion is verified), the processing module 70 continues with step 803.

In step 803 the processing module 70 estimates a clipping factor *div_UV* based on the computed chroma components $U_{post3}$ and $V_{post3}$ and on a precision of the components $U_{post3}$ and $V_{post3}$ computed in step 1444 using the LUT *newlutCC*.

The following process is applied during step 803 to determine the clipping factor *div_UV (all* computations being performed in floating points):

$$\text{if } (U_{post2}> U_{max})$$

$$div\_U = U_{post2}/ U_{max};$$

$$\text{if } (U_{post2}< - U_{max})$$

$$div\_U = - U_{post2}/ U_{max};$$

$$\text{if } (V_{post2}) > V_{max})$$

$$div\_V = V_{post2}) \ / \ V_{max};$$

$$\text{if } (V_{post2}) < - V_{max})$$

$$div\_V = - V_{post2}) \ / \ V_{max};$$

$$div\_UV = \text{MAX}(div\_U, div\_V);$$

In a step 804, the processing module 70 represents each computed chroma component $U_{post3}$ and $V_{post3}$ as a multiplication of a first sub-part depending on a luma component of the current sample and a second sub-part depending on a corresponding chroma component of the current sample and obtains a first ratio *partY* of a correction factor based on the clipping factor to be applied to the first sub-part and a second ratio *(1-partY)* of the correction factor to be applied to the second sub-part.

As detailed in equation (29) of the SL-HDR1 specification, replacing *lutCC* by *newlutCC*:

$$U_{post3} = newlutCC[Y_{post2}] . U_{post1}$$

$$V_{post3} = newlutCC[Y_{post2}] . V_{post1}$$

When the clipping factor *div_UV* for the current sample is greater than "1", this means that the chroma components $U_{post3}$ and $V_{post3}$ need to be modified as follow:

$$U_{post3_{target}} = \frac{U_{post3}}{\text{div\_UV}} = \frac{newlutCC[Y_{\text{post2}}] \cdot U_{\text{post1}}}{\text{div\_UV}}$$

$$= \frac{newlutCC[Y_{\text{post2}}]}{\text{div\_UV}^{\text{partY}}} \cdot \frac{U_{\text{post1}}}{\text{div\_UV}^{(1-\text{partY})}}$$

$$V_{post3_{target}} = \frac{V_{post3}}{\text{div\_UV}} = \frac{newlutCC[Y_{\text{post2}}] \cdot V_{\text{post1}}}{\text{div\_UV}}$$

$$= \frac{newlutCC[Y_{\text{post2}}]}{\text{div\_UV}^{\text{partY}}} \cdot \frac{V_{\text{post1}}}{\text{div\_UV}^{(1-\text{partY})}}$$

*newlutCC*[$Y_{\text{post2}}$] corresponds to the first sub-part and $U_{\text{post1}}$ corresponds to the second sub-part. As can be seen, one part of the correction applies to the first sub-part *newlutCC*[$Y_{post2}$] that depends on the Luma component $Y_{post2}$ that depends directly on the luma component $Y_{in}$ of the converted picture. A second part of the correction applies to the chroma components $U_{post1}$ and $V_{post1}$ that depend directly on the chroma components $U_{in}$ and $V_{in}$ of the converted picture.

The embodiments for determining the first ratio *partY* (pre-determined fixed value defined for all samples, predetermined but dynamic between pictures, predetermined but dynamic within a picture, fixed to "0.75" for all samples) apply identically during step 804.

In a step 805, the processing module 70 computes a corrected luma value $Y_{in\_corr}$ of a sample of a corrected SDR picture corresponding to the current sample using a division of the first sub-part by the correction factor to a power equal to the first ratio as follows

$$newlutCC[Y_{in\_corr}] = \frac{newlutCC[Y_{\text{post2}}]}{\text{div\_UV}^{\text{partY}}}$$

In an embodiment of step 805, the corrected luma value $Y_{in\_corr}$ is computed directly by computing the inverse of the color correction LUT *newlutCC,* i.e., *inv_newlutCC[].* In other words, the LUT *inv_newlutCC[]* represents an inverse of the function represented by *newlutCC.* The corrected luma value $Y_{in\_corr}$ is computed as follows:

$$Y_{\text{in\_corr}} = inv\_newlutCC\left[\frac{newlutCC[Y_{\text{post2}}]}{div\_UV^{\text{partY}}}\right]$$

In a step 806, for each chroma component ($U_{in}$ and $V_{in}$), the processing module 70 computes a chroma value ($U_{in\_corr}$ or $V_{in\_corr}$) for the sample of the corrected SDR picture corresponding to the current sample by using a division of the second sub-part of the chroma component by the correction factor to a power equal to the second ratio as follows:

$$U_{in\_corr} = \frac{U_{\text{post1}}}{\text{div\_UV}^{(1-\text{partY})}}$$

$$V_{in\_corr} = \frac{V_{\text{post1}}}{\text{div\_UV}^{(1-\text{partY})}}$$

At the end of the process of Fig. 4, the processing module 70 obtains a corrected sample with components $Y_{\text{in\_corr}}$, $U_{in\_corr}$ and $V_{in\_corr}$

If the criterion of step 802 is not verified (i.e., if there is no risk of clipping), the processing module 70 continues with step 807. In step 807, no correction of the current sample motivated by a risk of clipping is applied. However, the component Y of the current sample still needs to be modified by the LUT *Y_LUT* to ensure that the HDR data that would be obtained on the pre-processing module 11 side by applying the ITM LUT to the input SDR data *SDR_in* is as close as possible to the HDR data outputted by the post-processing module 14. No modification is applied to the chroma components of the current sample. Step 807 cancels and replaces the application of the LUT *Y_LUT* during step 114.

**Fig. 8B** provides a representation of the process of Figs. 2, 3 and 8A in terms of access to LUTs.

In step 811, the processing module 70 accesses and applies the LUT *newlutCC* in step 801.

In a step 812, the processing module 70 determines if there is a risk of clipping.

If there is a risk of clipping, in a step 814, the processing module 70 accesses and applies the LUT inv_new*lutCC* in step 805.

If there is no risk of clipping, in a step 813 the processing module 70 accesses and applies the LUT Y_LUT in step 801.

As can be seen, in the implementation of the process of Figs. 2, 3 and 8A, there are always two accesses to LUTs. The complexity of the process of Fig. 2, 3 and 8A is therefore steady (i.e., non-variable) which uses less hardware resources.

One can note that in the embodiments described above, the PICP process (SDR correction step 114) is performed during the pre-processing process by the pre-processing module 11. In that case, the SDR video that is encoded along with the SL-HDR1 metadata by the encoding module 12 comprises corrected SDR pictures resulting from an application of the SDR correction step 114 on the SDR video provided by the source device 10 (or resulting from an ITM applied to the HDR video provided by the source device 10). In this embodiment, the post-processing module 14 doesn't have to correct the SDR pictures to avoid a clipping since it has already been done by the pre-processing module 11.

We described above a number of embodiments. Features of these embodiments can be provided alone or in any combination. Further, embodiments can include one or more of the following features, devices, or aspects, alone or in any combination, across various claim categories and types:

- A bitstream or signal that includes a corrected SDR video, or variations thereof.

- Creating and/or transmitting and/or receiving and/or decoding a bitstream or signal that includes a corrected SDR video, or variations thereof.

- A server, camera, TV, set-top box, cell phone, tablet, personal computer or other electronic device that performs at least one of the embodiments described.

- A TV, set-top box, cell phone, tablet, personal computer or other electronic device that performs at least one of the embodiments described, and that displays (e.g. using a monitor, screen, or other type of display) a resulting picture.

- A TV, set-top box, cell phone, tablet, personal computer or other electronic device that tunes (e.g. using a tuner) a channel to receive a signal including an encoded SDR video and SL-HDR1 metadata, and performs at least one of the embodiments described.

- A TV, set-top box, cell phone, tablet, or other electronic device that receives (e.g. using an antenna) a signal over the air that includes an encoded SDR video and SL-HDR1 metadata, and performs at least one of the embodiments described.

- A server, camera, cell phone, tablet, personal computer or other electronic device that tunes (e.g. using a tuner) a channel to transmit a signal including a corrected SDR video and SL-HDR1 metadata, and performs at least one of the embodiments described.

- A server, camera, cell phone, tablet, personal computer or other electronic device that transmits (e.g. using an antenna) a signal over the air that includes a corrected SDR video and SL-HDR1 metadata, and performs at least one of the embodiments described.

**Claims**

1. A method comprising:
   applying a correction process for correcting an input SDR picture into an output SDR picture intended to be transformed in a HDR picture using metadata, the correction process using a first LUT for transforming a luma component of the input SDR picture in a luma component of the output SDR picture and a second LUT representing a color correction function, the correction process comprising when applied to a current sample of the SDR input picture:

   computing (801) chroma components from the current sample using a third LUT combining the first LUT and the second LUT, the third LUT representing a first function; and
   responsive to (802) at least one of the chroma components is out of a first range of allowed values:

   estimating (803) a clipping factor based on the computed chroma components and on a first range of allowed values;
   representing (804) each computed chroma component as a multiplication of a first sub-part depending on a luma component of the current sample and a second sub-part depending on a corresponding chroma component of the current sample and obtaining a first ratio of a correction factor to be applied to the first sub-part and a second ratio of the correction factor to be applied to the second sub-part, the correction factor being based on the clipping factor;

computing (805) a luma value of a sample of the output SDR picture corresponding to the current sample inputting a division of the first sub-part by the correction factor to a power equal to the first ratio to a fourth LUT representing an inverse of the first function; and,

for each chroma component, computing (806) a chroma value for the sample of the output SDR picture corresponding to the sample of the input SDR picture by dividing the second sub-part of the chroma component by the correction factor to a power equal to the second ratio.

2. The method of claim 1 wherein, responsive to none of the chroma components is out of the first range of allowed values:

applying (807) the first LUT to the luma component of the current sample and
keeping the chroma components of the current sample to obtain the sample of the output SDR picture.

3. A device comprising electronic circuitry configured for:
applying a correction process for correcting an input SDR picture into an output SDR picture intended to be transformed in a HDR picture using metadata, the correction process using a first LUT for transforming a luma component of the input SDR picture in a luma component of the output SDR picture and a second LUT representing a color correction function, the correction process comprising when applied to a current sample of the SDR input picture:

computing (801) chroma components from the current sample using a third LUT combining the first LUT and the second LUT, the third LUT representing a first function; and
responsive to (802) at least one of the chroma components is out of a first range of allowed values:

estimating (803) a clipping factor based on the computed chroma components and on a first range of allowed values;
representing (804) each computed chroma component as a multiplication of a first sub-part depending on a luma component of the current sample and a second sub-part depending on a corresponding chroma component of the current sample and obtaining a first ratio of a correction factor to be applied to the first sub-part and a second ratio of the correction factor to be applied to the second sub-part, the correction factor being based on the clipping factor;
computing (805) a luma value of a sample of the output SDR picture corresponding to the current sample inputting a division of the first sub-part by the correction factor to a power equal to the first ratio to a fourth LUT representing an inverse of the first function; and,
for each chroma component, computing (806) a chroma value for the sample of the output SDR picture corresponding to the sample of the input SDR picture by dividing the second sub-part of the chroma component by the correction factor to a power equal to the second ratio.

4. The device of claim 3 wherein, the electronic circuitry is configured for:

applying (807) the first LUT to the luma component of the current sample and
keeping the chroma components of the current sample to obtain the sample of the output SDR picture responsive to none of the chroma components is out of the first range of allowed values.

5. The method of claim 1 or 2 or the device of claim 3 or 4 wherein, the metadata are compliant with SL-HDR1.

6. A computer program comprising program code instructions for implementing the method according to claim 1, 2 or 5.

7. Non-transitory information storage medium storing program code instructions for implementing the method according to claim 1, 2 or 5.

Fig. 1

Obtaining SDR_in — 110

Analysis & compute ITM LUT — 111

Convert to SL-HDR data — 112

Compute Y LUT, CC LUT and invCC LUT — 113

Compute SDR_out applying PICP — 114

Fig. 2

YUV 420 to YUV 444 — 1141

1142 — All samples processed ? — yes — YUV 444 to YUV 420 — 1144

no

Correct sample — 1143

Fig. 3

Compute HDR chroma
using lutCC — 11431

11332 — Risk of clipping ?  →  no  →  No correction — 11437

↓ yes

Estimate clipping factor — 11433

Estimate correction ratio
for luma and chroma — 11434

Compute modified Luma
value using CC function — 11435

Compute modified
chroma values — 11436

Fig. 4A

```
            ┌──────────────────────┐
            │                      │
            │    Apply Y_LUT       │  ∿  401
            │                      │
            └──────────┬───────────┘
                       │
                       ▼
            ┌──────────────────────┐
            │                      │
            │    Apply lutCC       │  ∿  402
            │                      │
            └──────────┬───────────┘
                       │
                       ▼
403  ⟨  ╱────────────────────╲      no    ┌──────────────────┐
       ╱                      ╲ ─────────▶ │                  │
       │   Risk of clipping ?  │           │  No correction   │
       ╲                      ╱            │                  │
        ╲────────────────────╱            └──────────────────┘
                   │                              ∿
                   │ yes                         404
                   ▼
            ┌──────────────────────┐
            │                      │
            │   Apply inv_lutCC    │  ∿  405
            │                      │
            └──────────────────────┘
```

Fig. 4B

Obtaining decoded SDR data and SL-HDR1 metadata — 140

Derivation of Luma ITM LUT — 142

Derivation of Chroma CC LUT — 143

SDR-to-HDR reconstruction — 144

HDR data

Fig. 5

YUV 420 to YUV 444 — 441

Compute $Y_{post2}$ — 442

Inverse color correction — 443

Compute $S_0, U_{post3}, V_{post3}$ — 444

Compute $HDR$ — 445

Fig. 6

| | | |
|---|---|---|
| **700**<br>CPU | **701**<br>RAM | **702**<br>ROM |

705

703    704    70

Fig. 7A

RF, COMP,
USB, HDMI

72

705

70

B

71

Communication channel

Fig. 7B

Fig. 7C

Compute HDR chroma
using newLutCC — 801

Risk of clipping ? — 802

no → Apply Y_LUT — 807

yes

Estimate clipping factor — 803

Estimate correction ratio
for luma and chroma — 804

Compute modified Luma
value — 805

Compute modified
chroma values — 806

Fig. 8A

Apply newLutCC — 811

Risk of clipping ? — 812

no → Apply Y_LUT — 813

yes

Apply inv_newlutCC — 814

Fig. 8B

Europäisches
Patentamt

European
Patent Office

Office européen
des brevets

# EUROPEAN SEARCH REPORT

**Application Number**

EP 24 30 6576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/194089 A1 (INTERDIGITAL CE PATENT HOLDINGS SAS [FR]) 12 October 2023 (2023-10-12) * page 1, line 19 - page 2, line 25 * * page 6, line 26 - page 7, line 26 * * page 16, line 3 - page 24, line 22 * * figures 1-6 * | 1-7 | INV. G06T5/90  ADD. H04N9/68 |
| A | "High-Performance Single Layer High Dynamic Range (HDR) System for use in Consumer Electronics devices; Part 1: Directly Standard Dynamic Range (SDR) Compatible HDR System (SL-HDR1)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. BROADCAS, no. V1.4.1 23 August 2021 (2021-08-23), pages 1-136, XP014400033, Retrieved from the Internet: URL:http://www.etsi.org/deliver/etsi_ts/103400_103499/10343301/01.04.01_60/ts_10343301v010401p.pdf [retrieved on 2021-08-23] * section 7.2.4 * | 1-7 | |

|  |  |  | TECHNICAL FIELDS SEARCHED (IPC) |
|---|---|---|---|
|  |  |  | G06T H04N |

The present search report has been drawn up for all claims

| Place of search | Date of completion of the search | Examiner |
|---|---|---|
| Munich | 25 February 2025 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6576

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | | Publication date |
|---|---|---|---|---|
| WO 2023194089 A1 | 12-10-2023 | CN | 119325710 A | 17-01-2025 |
| | | EP | 4505394 A1 | 12-02-2025 |
| | | KR | 20240171140 A | 06-12-2024 |
| | | WO | 2023194089 A1 | 12-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023194089 A

**Non-patent literature cited in the description**

- High-Performance Single Layer High Dynamic Range (HDR) System for use in Consumer Electronics devices; Part 1: Directly Standard Dynamic Range (SDR) Compatible HDR System (SL-HDR1). *ETSI TS 103 433-1 V1.4.1*